# EUROPEAN PATENT APPLICATION

(11) **EP 1 338 866 A2**
(43) Date of publication of application: **27.08.2003**
(21) Application number: 03003840.0
(22) Date of filing: 20.02.2003
(51) Int. Cl.: G01C 21/36

(54) **Display apparatus, portable terminal, data display system and control method of the data display system**

(30) Priority: 21.02.2002 JP 2002044272
(71) Applicant: TOYOTA JIDOSHA KABUSHIKI KAISHA, Aichi-ken 471-8571 (JP)
(72) Inventor: Kakihara, Masaki, Toyota-shi, Aichi-ken, 471-8571 (JP); Shiga, Tsuneo, Toyota-shi, Aichi-ken, 471-8571 (JP)
(74) Representative: Trösch, Hans-Ludwig

(57) **Abstract**

A portable terminal (12) such as a cellular phone and an in-vehicle device (10) such as a vehicle navigation system are connected. After detecting the connection between the portable terminal and the in-vehicle device, a control unit of the cellular phone supplies display data to be displayed on its screen to the in-vehicle device. A control unit of the in-vehicle device displays on a screen the display data supplied from the portable terminal. Touch switches such as alphanumeric keys of the cellular phone are further displayed in the blank area of the screen of the in-vehicle device, enabling operation of the cellular phone from the in-vehicle device.

## Description

### BACKGROUND OF THE INVENTION

### 1. Field of Invention

The invention relates to displaying data information that has been displayed on a screen of a portable terminal, such as a cellular phone, on a large screen of a device separated from the portable terminal.

### 2. Description of Related Art

In recent years, many types of display apparatuses have been proposed in conjunction with development of various data terminals. For example, Japanese Laid-Open Publication No. 11-288253 discloses a liquid crystal display apparatus with a structure that allows separation of the liquid crystal display portion from the computer. As a result, the separated liquid crystal display portion is capable of functioning as a display apparatus of a multipurpose personal computer system, or as an independent portable display apparatus.

This reference also discloses that when the liquid crystal display portion is used independently as a portable image display apparatus, it may be connected with a portable data instrument such as a cellular phone. This feature makes it possible to supply image data that has been uncompressed using a CPU within the portable data instrument to the liquid crystal display portion. As a result, the uncompressed data can be displayed on the liquid crystal display portion.

In light of there being no ability to process image data in the display apparatus itself when processing data that should be displayed, there has been disclosed (with respect to processing of image data) using the CPU of an external instrument such as a cellular phone, and displaying the processed image data on the display apparatus. However, the aforementioned publication discloses no technology for displaying the information displayed on the cellular phone on a larger screen of the display apparatus. In particular, as displayed on the recent third-generation cellular phones, cellular phone screens have become capable of not only displaying still images, but moving images as well. The size of the cellular phone screen is limited due to portability constraints. Therefore, it can be difficult to see the data on the screen at times and many users desire a larger screen on which to display data. The aforementioned technology fails to meet the user demand for a larger screen to display data displayed on the cellular phone.

The technology for displaying a PDA screen on the Web after connecting the cellular phone and a PDA is known. However, the cellular phone does nothing more than provide a communication interface to the PDA. Data displayed on the PDA screen are mere images created within the PDA and not data displayed on the cellular phone screen.

### SUMMARY OF THE INVENTION

It is an object of the invention to provide a display apparatus and display system allowing enjoyment of data, which should be displayed on the screen of a portable terminal, such as a cellular phone, on a larger screen, and in particular, enabling easy visual recognition of a cellular phone screen inside a vehicle as well.

According to one aspect of the invention, a display apparatus is provided with an interface connected to a portable terminal, which allows an input of data information to be displayed on a screen of the portable terminal. The apparatus further includes a control unit that converts the data information into display data information, and a display unit that has a screen larger than a screen of the portable terminal, the display unit having the display data information displayed on the screen.

Furthermore, the apparatus may include an input portion through which the data information is input wherein the interface is operative to transmit the data information input through the input portion to the portable terminal.

Also, the control unit may convert the data information into the display data information on the basis of each screen size of the display apparatus and the portable terminal.

The control unit may set the screen of the portable terminal to a non-display mode when it is determined that the portable terminal is connected with the display apparatus.

The portable terminal may, for example, be a cellular phone.

According to another aspect of the invention, a portable terminal is provided with an interface that is operative to connect the portable terminal with the in-vehicle device, and a control unit that converts data information to be displayed on a screen of the portable terminal into display data information on the basis of a screen size of the in-vehicle device such that the display data information is transmitted to the interface.

The control unit may set the screen of the portable terminal to a non-display mode when it is determined that the portable terminal is connected with the in-vehicle device.

According to another aspect of the invention, an information display system includes an in-vehicle device and a portable terminal. In the information display system, the portable terminal includes an interface that is operative to connect the portable terminal with the in-vehicle device, and a control unit that transmits data information to be displayed on a screen of the portable terminal to the in-vehicle device. Also, the in-vehicle device includes an interface that is operative to connect the in-vehicle device with the portable terminal, and a display control unit that displays the data information transmitted from the portable terminal on a screen of the in-vehicle device that is larger than the screen of the portable terminal.
The data information to be displayed on the screen of the portable terminal is displayed on the screen of the in-vehicle device.

In the system, the control unit of the portable terminal may supply operation command data information thereof to the in-vehicle device when it is determined that the portable terminal is connected with the in-vehicle device. The display control unit of the in-vehicle device may display the operation command data information from the portable terminal on the screen of the in-vehicle device together with the data information.

In the system, the in-vehicle device may further include a command input portion, and the control unit may transmit a command input from the command input portion to the portable terminal through the interface of the in-vehicle device. The control unit of the portable terminal interprets the command supplied from the in-vehicle device so as to be executed.

The display control portion of the in-vehicle device may display the data information from the portable terminal and the command input portion is displayed in a tough switch on the screen of the in-vehicle device.

Thus, data that should be displayed on the screen of a portable terminal such as a cellular phone may be displayed on a larger screen. For example, supposing that the in-vehicle device such as a navigation system mounted in a vehicle is used as the large screen display apparatus, it would be possible to display data of the portable terminal on a large screen set at an optimum location in the vehicle. Also, in the invention, a data input portion is provided on the display apparatus, and by operating the portable terminal through this data, operating the portable terminal using small operation buttons of the portable terminal is no longer necessary.

### BRIEF DESCRIPTION OF THE DRAWINGS

FIG. 1 is an exemplary block diagram of a system of an embodiment of the invention;
FIG. 2 is an exemplary flowchart of a process executed in an in-vehicle device according to the embodiment of the invention;
FIGs. 3A-3B are exemplary diagrams showing screen sizes of the in-vehicle device and the portable terminal according to the embodiment, respectively;
FIGs. 4A-4B are exemplary diagrams showing the in-vehicle device and the portable terminal on which each data information is displayed, respectively; and
FIG. 5 is an exemplary flowchart of a process executed in the portable terminal according to the embodiment of the invention.

### DETAILED DESCRIPTION OF EXEMPLARY EMBODIMENTS

Hereafter, an embodiment of the invention in which a cellular phone is used within a vehicle will be described with reference to the drawings.

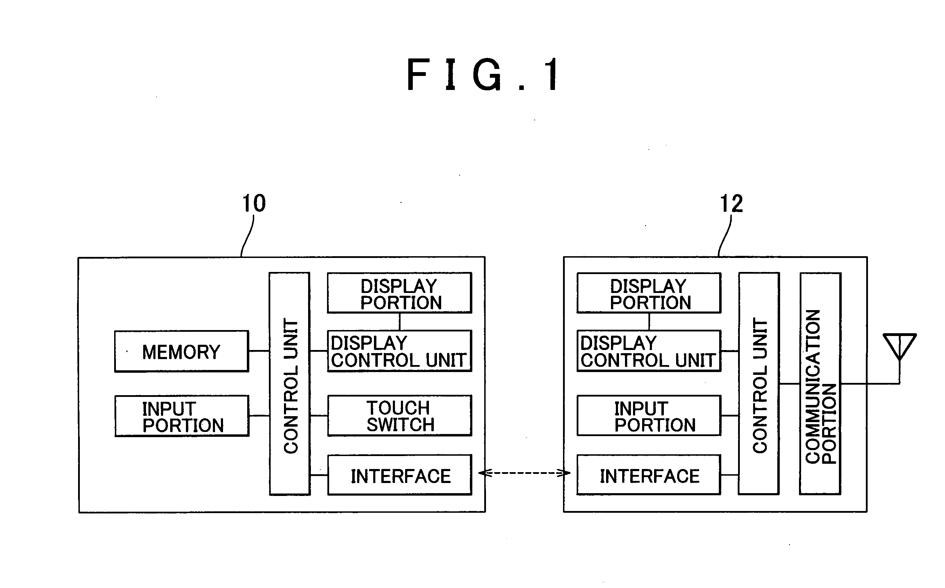

FIG. 1 illustrates an exemplary block diagram of a data display system of the embodiment. The data display system includes an in-vehicle device 10 mounted in a vehicle, and a cellular phone 12 that is connected to the in-vehicle device 10. The in-vehicle device 10, for example, can be dually used with a vehicle navigation system. The vehicle navigation system includes an input portion, a processing portion, a map data memory portion, and a display portion. The input portion, processing portion, and display portion may be used as they are by the in-vehicle device. The in-vehicle device 10 includes as function blocks a memory, an input portion, a control unit, an interface, touch switches, a display control portion, and a display portion. The input portion and touch switches can be used in common (the touch switches can be made the input portion). The input portion may include operation switches or operation buttons provided near the display portion. The memory includes a RAM, flash memory and the like. The display portion may be formed of the liquid crystal display apparatus of the navigation system and the like. The interface may be of a wired or wireless communication type using IEEE1394 and Bluetooth, for example.

Meanwhile, the cellular phone 12 serving as a portable terminal includes a communication portion, a control unit, an interface, an input portion, a display control portion, and a display portion. The interface may be of a wired or wireless type that is the same as the interface used in the in-vehicle device 10. The control unit of the cellular phone 12 serves as the cellular phone in addition to monitoring the connected state of the interface and implementing a certain processing through the interface when the in-vehicle device 10 is connected with the cellular phone 12. Specifically, the control unit of the cellular phone 12 controls the display control portion of the cellular phone 12, and supplies data displayed on the display portion (screen) of the cellular phone to the in-vehicle device 10 through the interface. The data displayed on the screen of the cellular phone 12 is displayed on the display portion (screen) of the in-vehicle device 10. The user is then able to confirm data on the screen of the in-vehicle device 10, which is larger and easier to see than the screen of the cellular phone 12.

Also, the control unit of the cellular phone 12 supplies operation command data (or configuration data) of the cellular phone 12 to the in-vehicle device 10 through the interface. In the in-vehicle device 10, this operation command is displayed on the screen so as to function as the operation portion of the cellular phone 12. Using the operation commands, the operation data information of the user is then supplied to the cellular phone 12 from the in-vehicle device 10 through the interface. The control unit of the cellular phone 12 interprets these operation commands as its own operation commands, implements processing in accordance with the operation commands, and depending on the command content, sends data to external portions via the communication portion. For example, in the case of a command to operate a hyperlink displayed on the screen, the web page corresponding to http is requested to a content provider. In this case, the operation of the cellular phone 12 is actually conducted by the in-vehicle 10. The operation buttons or switches of the cellular phone 12 can be substituted with those of the in-vehicle device 10. The aforementioned operation of the control unit of the cellular phone 12 may be implemented in accordance with a program stored in ROM.

When display data are supplied from the control unit of the cellular phone 12 through the interface, the control unit of the in-vehicle device 10 supplies those data to the display control portion of the in-vehicle device. In the display control portion, the received display data are processed, then supplied to the display portion so as to be displayed at a size larger than the screen of the cellular phone 12. In addition, when operation command data (configuration data) are supplied from the cellular phone 12 through the interface, they are also supplied to the display control portion so as to be displayed on the screen. Touch switches, for example, may be used as the display of the operation commands. When the touch switches are operated by the user, the corresponding operation command is transmitted to the control unit of the cellular phone 12 through the control unit and the interface. The control unit of the in-vehicle device 10 also implements processing when it is connected with the cellular phone 12 in accordance with the program preliminarily stored in ROM. The in-vehicle device 10 and the cellular phone 12 may be wirelessly connected or connected by wire. In the case of a wired connection, the connection between the cellular phone 12 and the in-vehicle device 10 may be established by setting the cellular phone 12 into a cradle provided in a certain location in the vehicle.

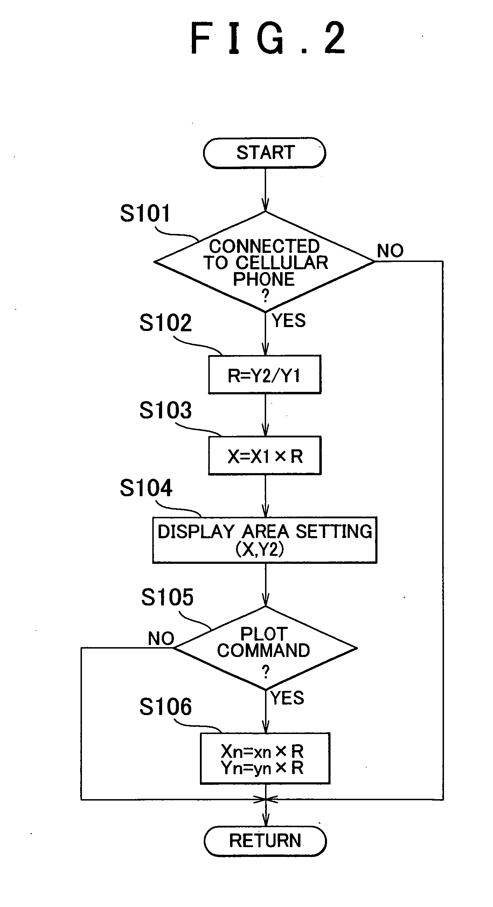

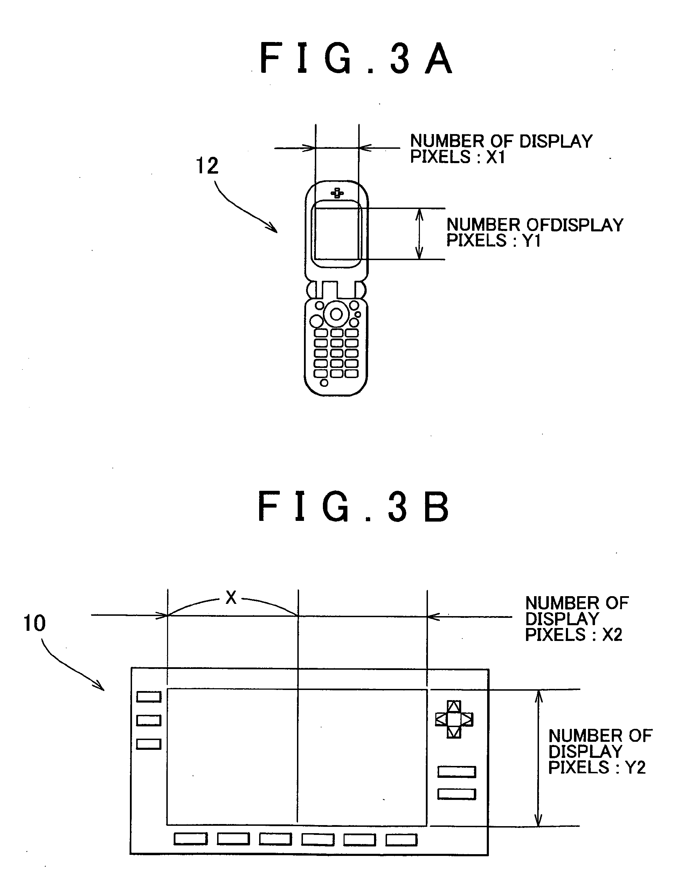

Referring to FIG. 2, the exemplary flowchart illustrates the process executed in the in-vehicle device 10 of the information display system. First in step S101, it is determined whether the cellular phone 12 is connected with the in-vehicle device 10 through the interface. If YES is determined, that is, the cellular phone 12 is wirelessly connected or connected by wire with the in-vehicle device 10, the control unit of the in-vehicle device 10 sets the display area of its own screen on which the data displayed on the screen of the cellular phone 12 are displayed. The control unit of the in-vehicle device 10 sets an optimum display area on the basis of the difference in the screen size or the number of screen display pixels between the cellular phone 12 and the in-vehicle device 10. Specifically, referring to FIG. 3, assuming that the cellular phone 12 has a lateral size X1 representing lateral display pixels, and a longitudinal size Y1 representing longitudinal display pixels, and the in-vehicle device 10 has a lateral size X2 representing lateral display pixels, and a longitudinal size Y2 representing longitudinal display pixels, a screen size ratio R of the number of longitudinal display pixels of the in-vehicle device 10 to the cellular phone 12 is obtained using the formula, that is, R = Y2/Y1, in step S102. As the longitudinal size Y2 represents the characteristic value of the in-vehicle device 10 screen, such value can be stored in advance in the memory, for example. Meanwhile, the longitudinal size Y1 of the cellular phone 12 screen can be obtained by the control unit of the in-vehicle device 10 that sends a command requesting screen size parameters to the control unit of the cellular phone 12 after detecting a connection between the cellular phone 12 and the in-vehicle device 10. Then the control unit of the cellular phone 12 returns the screen size parameters stored in advance in the memory in response to the command. The control unit of the cellular phone 12 may be structured to supply the screen size parameters automatically after determining the connection between the cellular phone 12 and the in-vehicle device 10.

Referring to FIG. 2, after calculating the ratio R in step S102, the process proceeds to step S103 where the control unit of the in-vehicle device 10 then calculates the lateral size X of the in-vehicle device 10 screen on which the data displayed on the screen of the cellular phone 12 is calculated using the ratio R and the lateral size X1 of the cellular phone 12. The lateral size X of the lateral display area is calculated using the ratio R obtained in step S102 and the lateral size X1 of the cellular phone screen 12 as shown by the formula, X = X1 x R in step S103. After calculating the lateral size X of the in-vehicle device 10, using X and Y2 in step S104, the control unit of the in-vehicle device 10 sets the area (X, Y2) for displaying the screen data of the cellular phone 12 on the screen of the in-vehicle device 10. Needless to say, (X, Y2) is the area where the screen of the cellular phone 12 is fully displayed in the longitudinal direction on the screen of the in-vehicle device 10.

FIG. 3B shows the display area (X, Y2) as set above displayed on the screen of the in-vehicle device 10. The screen size of the in-vehicle device 10 is larger than that of the cellular phone 12. When the screen of the in-vehicle device 10 is long from side to side, even if the display screen of the cellular phone 12 is fully displayed in the longitudinal direction on the screen of the in-vehicle device 10, a blank area will exist on the screen of the in-vehicle device 10, that is, X < X2.

After the display area is set in step S104, the process proceeds to step S105 in which it is determined whether a plot command has been supplied from the cellular phone 12 to the in-vehicle device 10. If YES is obtained, that is, the plot command has been sent, the process proceeds to step S106. In step S106, the coordinate data corresponding to the screen size of the in-vehicle device 10, that is, (Xn, Yn) are obtained by multiplying the ratio R by the coordinate data included in the plot command using the formulae, that is, Xn = xn R and Yn = yn · R, so as to be supplied to the display control portion and the display portion. If a plurality of plot commands exist, the bit-map conversion will be repeatedly performed. The data supplied from the control unit are stored in VRAM of the display control portion, and are supplied to the display portion. The data will be displayed within the display area (X, Y2) on the screen of the in-vehicle device 10 as set in step S104. Preferably the control unit of the in-vehicle device 10 performs conversion of the bit-map data for display and then converts the number of pixels. Assuming that the coordinate of the screen size of the cellular phone 12 (X1, Y1) is (144, 176), and that the coordinate of the screen size of the in-vehicle device (X2, Y2) is (400, 234), the ratio R results in 1.33 or 3:4. Therefore, one line may be added to every third line of the original data in the longitudinal bitmap data. This additional data is created by calculating the arithmetic average of the third and fourth lines of data in the original data to use as the fourth line of display data. The same process also applies to the lateral direction. Thus, the original 176 x 144 pixel data is displayed as 234 x 192 pixel data. The conversion of images with few pixels into images with many pixels is a commonly known technology, and can be accomplished not only through the use of an arithmetic average, but also with other arbitrary interpolation methods such as a weighted average.

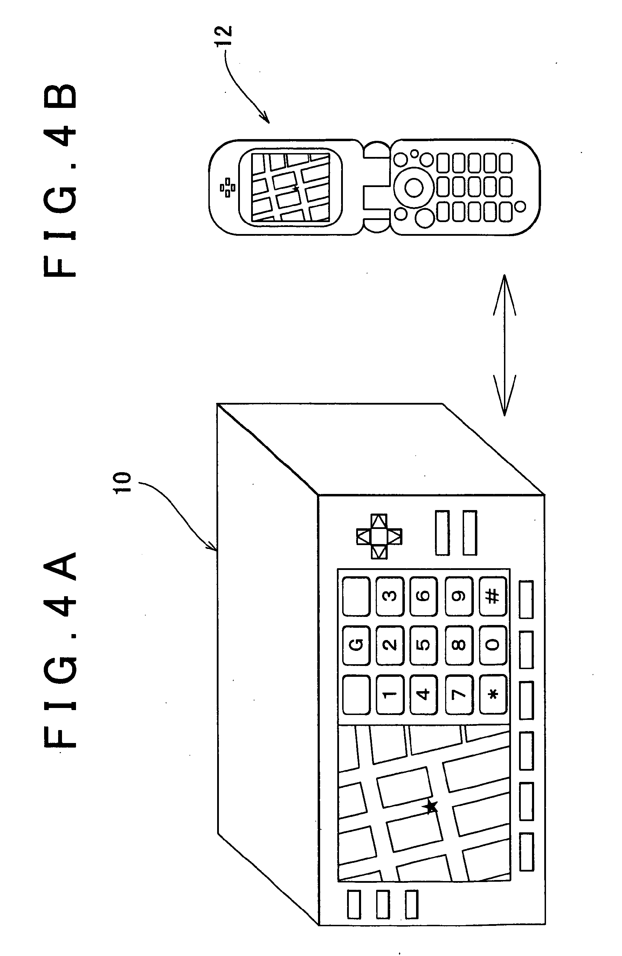

FIGs. 4A-4B show the exemplary screen display of the cellular phone 12 displayed on the screen of the in-vehicle device 10 as described above. In FIGs 4A-4B, map data is displayed on the cellular phone 12. Meanwhile, the same data as this map data is fully displayed longitudinally on the left half (display area (X, Y2)) of the screen of the in-vehicle device 10. In addition, operation command data supplied from the cellular phone 12 is displayed in the touch switch form in the blank area of the in-vehicle device 10 where the map data is not displayed. Alphanumeric keys as well as function keys (G key within the figure) of the cellular phone 12 exist as operation command data, and these operation keys are displayed in substantially the same arrangement as the cellular phone 12 operation key arrangement. The user is able to operate the cellular phone 12 using the touch switches displayed on the screen of the in-vehicle device 10 and confirm map data on the large-sized screen of the in-vehicle device 10 instead of the small screen of the cellular phone 12. In other words, when the user operates the touch switches displayed on the right half of the screen while looking at the map data, the operation commands corresponding to the touch switches are supplied to the controller of the cellular phone 12 from the control unit of the in-vehicle device 10. The control unit of the cellular phone 12 processes the operation commands from the in-vehicle device 10 as if the operation commands were from the operation keys of the cellular phone 12 itself and implements the function of the cellular phone 12. For example, when the numeric key (4) is operated in the cellular phone 12, if the operation represents the function for scrolling the map data to the left, when the user operates the touch switch (4) displayed on the screen of the in-vehicle device 10, the operation command is then supplied to the cellular phone 12. The control unit of the cellular phone 12, based on the operation command, scrolls the map data displayed on the screen of the cellular phone 12 to the left. Along with displaying the map data that has been scrolled to the left on the screen of the cellular phone 12, the control unit of the cellular phone 12 also supplies this display data to the in-vehicle device 10 since the in-vehicle device 10 and the cellular phone 12 are connected.

The control unit of the in-vehicle device 10 processes the display data sent from the cellular phone 12 according to the process of the flowchart as shown in FIG. 2, and displays the scrolled map data on the screen of the in-vehicle device 10 as well. On the blank area of the in-vehicle device 10, menu keys for operating the map data may be displayed instead of operation keys; for example, displaying arrows showing a direction for movement, and when the user touches any arrow, that command is sent to the cellular phone 12 from the control unit of the in-vehicle device 10. The control unit of the in-vehicle device 10 converts the operation content of the touch switch into a form capable of interpretation by the control unit of the cellular phone 12 and supplies it to the cellular phone 12. The control unit of the cellular phone 12 interprets the sent operation command, operates its own screen, and supplies the display data obtained to the in-vehicle device 10 as well.

Once the data displayed on the screen of the cellular phone 12 is expanded and displayed on the screen of the in-vehicle device 10, the screen on the cellular phone 12 may be switched to a non-display (non-active) mode. Thus, along with allowing conservation of power on the cellular phone 12, for example, cases when certain contents with conditions for display on only one screen can also be accommodated. Of course, enabling the screen of the cellular phone 12 to switch to a display mode or non-display mode at will is also possible. For example, a conversion switch on the cellular phone 12 may be provided so that the user may set the screen of the cellular phone 12 to a display mode or non-display mode when connected with the in-vehicle device 10.

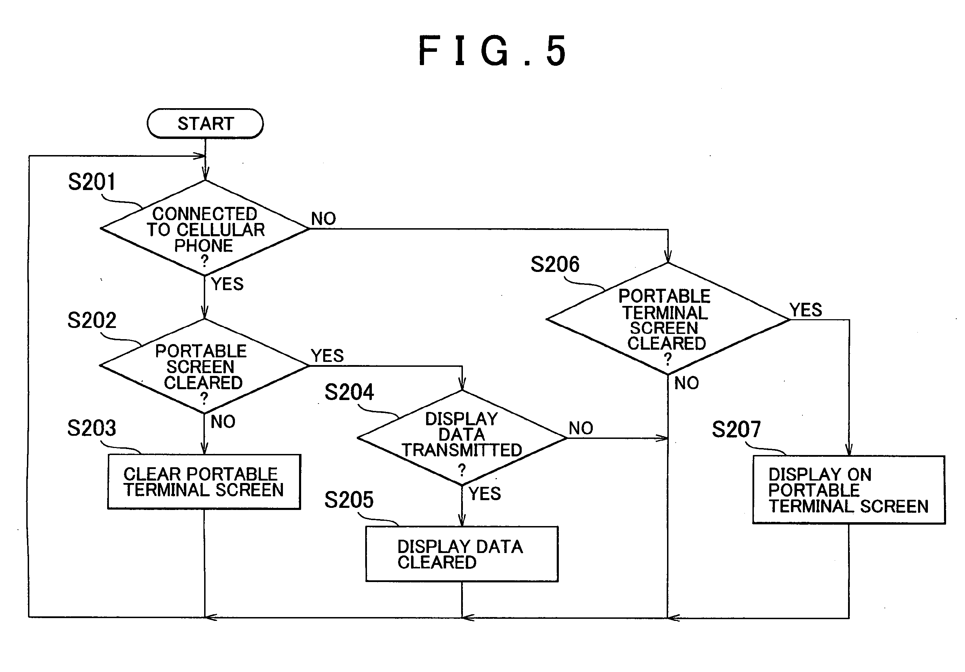

FIG. 5 illustrates an exemplary flowchart process that automatically sets the screen of the cellular phone 12 to a non-display mode when it is determined that the cellular phone 12 is connected with the in-vehicle device 10. Referring to FIG. 5, it is determined whether the in-vehicle device 10 and the cellular phone 12 are either wirelessly connected or connected by wire in step S201. If YES is determined in step S201, that is, connection between the in-vehicle device 10 and the cellular phone 12 is detected, the process proceeds to step S202. In step S202, it is determined whether the screen of the cellular phone 12 has been cleared, that is, whether the screen of the cellular phone 12 is set to the non-display mode. The aforementioned determination may be executed by the control unit of the in-vehicle device 10. In this case, when the control unit of the cellular phone 12 sets the screen to the non-display mode, the protocol to that effect which sends that command to the in-vehicle device 10 may be defined. If NO is obtained in step S202, that is, the screen of the cellular phone 12 is in the display mode, the control unit of the cellular phone 12 sets the screen to the non-display mode in step S203. The aforementioned processing may be executed by the control units of the in-vehicle device 10 and the cellular phone 12. The control commands to shift the screen of the cellular phone 12 to the non-display mode may be transmitted from the in-vehicle device 10 to the cellular phone 12.

Meanwhile if YES is determined in step S202, that is, it is determined that the screen of the cellular phone 12 has already been set to non-display mode, the process proceeds to step S204. In step S204, it is determined whether the data displayed on the screen of the cellular phone 12 has already been transmitted to the in-vehicle device 10. If YES is determined in step S204, that is, the data have already been transmitted to the in-vehicle device 10, the process proceeds to step S205. In step S205, the data to be displayed on the screen of the cellular phone 12 are cleared from the memory. This makes it possible to display the data only on the screen of the in-vehicle device 10.

When the user disconnects the connection between the cellular phone 12 and the in-vehicle device 10 in order to carry the cellular phone 12 outside the vehicle, the determination in step S201 becomes NO. Then the process proceeds to step S206 where it is determined whether the data displayed on the screen of the cellular phone 12 have been cleared, that is, the screen has been set to the non-display mode. If YES is determined in step S206, that is, the screen of the cellular phone 12 has already been set to the non-display mode, the process proceeds to step S207. In step S207, the control unit of the cellular phone 12 sets the screen of the cellular phone 12 to an active state, that is, the display mode in order to make the cellular phone operative.

Thus, it is possible for the user to easily display the data displayed on the cellular phone 12 by displaying the data on the larger screen of the in-vehicle device 10. Furthermore, since the touch switches for operating the cellular phone 12 are displayed together with the data on the in-vehicle device 10, it is possible to realize easy operation of the cellular phone 12.

An embodiment of the invention has been described above, but the invention is not limited to the aforementioned embodiment, and many variations are possible.

For example, in the embodiment, touch switches are displayed in the blank area of the screen of the in-vehicle device 10. The operation of map data and the like can be conducted through operation buttons provided in the in-vehicle device 10 without displaying the touch switches. In this case, the control unit of the in-vehicle device 10 may convert its operation command before sending such that it can be recognized by the control unit of the cellular phone 12.

Also, the data displayed on each screen of the in-vehicle device 10 and the cellular phone 12 may be switched between the display mode and the non-display mode instead of only switching the mode of the cellular phone 12 between the display mode and the non-display mode. For example, a selector switch may be provided at the in-vehicle device 10 such that the mode may be switched to the modes from 1 to 3 sequentially. That is, the mode 1 represents that the screen of the in-vehicle device is in the non-display mode, and the screen of the cellular phone is in the display mode. The mode 2 represents that the screen of the in-vehicle device and the screen of the cellular phone are both in the display modes. The mode 3 represents that the screen of the in-vehicle device is in the display mode, and the screen of the cellular phone is in the non-display mode.

Furthermore, in the embodiment, data displayed on the screen of the cellular phone 12 is fully displayed longitudinally on the screen of the in-vehicle device 10. It may be designed to allow the user to arbitrarily set the display area. Namely, the display area (X, Y) of the in-vehicle device 10 can be set to any arbitrary area (X, Y) that fulfills X>X1, Y>Y1 with regard to the screen size (X1, Y1) of the cellular phone 12. As one of the aforementioned examples, when function keys are displayed in a touch switch form in the lower portion of the screen of the in-vehicle device 10, in order to ensure the touch switch area, the display data of the cellular phone 12 are displayed with space left in the longitudinal direction or the like.

As described above, data displayed on the screen of the portable terminal such as a cellular phone can be easily displayed according to the invention.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

A portable terminal (12) such as a cellular phone and an in-vehicle device (10) such as a vehicle navigation system are connected. After detecting the connection between the portable terminal and the in-vehicle device, a control unit of the cellular phone supplies display data to be displayed on its screen to the in-vehicle device. A control unit of the in-vehicle device displays on a screen the display data supplied from the portable terminal. Touch switches such as alphanumeric keys of the cellular phone are further displayed in the blank area of the screen of the in-vehicle device, enabling operation of the cellular phone from the in-vehicle device.

## Claims

1. A display apparatus comprising:
an interface connected to a portable terminal (12), the interface allowing an input of data information to be displayed on a screen of the portable terminal;
a control unit that converts the data information into display data information; and
a display unit that has a screen larger than a screen of the portable terminal, the display unit displaying the display data information on the screen.

2. The display apparatus according to claim 1, further comprising an input portion through which the data information is input, wherein the interface transmits the data information input through the input portion to the portable terminal.

3. The display apparatus according to claim 1 or 2, wherein the control unit converts the data information into the display data information based on each screen size of the display apparatus and the portable terminal.

4. The display apparatus according to any one of claims 1, 2, or 3, wherein the control unit sets the screen of the portable terminal to a non-display mode when it is determined that the portable terminal is connected to the display apparatus.

5. The display apparatus according to claim any one of claims 1 to 4, wherein the portable terminal further comprises a cellular phone.

6. A portable terminal that is connected with an in-vehicle device, the portable terminal comprising:
an interface that connects the portable terminal to the in-vehicle device; and
a control unit that converts data information to be displayed on a screen of the portable terminal into display data information based on a screen size of the in-vehicle device such that the display data information is transmitted to the interface.

7. The portable terminal according to claim 6, wherein the control unit sets the screen of the portable terminal to a non-display mode when it is determined that the portable terminal is connected to the in-vehicle device.

8. The portable terminal according to claim 6, wherein the in-vehicle device further comprises a navigation system mounted in a vehicle.

9. An information display system including an in-vehicle device and the portable terminal, comprising:
a first interface that connects the portable terminal to the in-vehicle device;
a control unit that transmits data information to be displayed on a screen of the portable terminal to the in-vehicle device;
a second interface that connects the in-vehicle device to the portable terminal; and
a display control unit that displays the data information transmitted from the portable terminal on a screen of the in-vehicle device that is larger than the screen of the portable terminal, wherein:
the data information to be displayed on the screen of the portable terminal is displayed on the screen of the in-vehicle device.

10. The information display system according to claim 9, wherein:
the control unit of the portable terminal supplies operation command data information thereof to the in-vehicle device when it is determined that the portable terminal is connected to the in-vehicle device; and
the display control unit of the in-vehicle device displays the operation command data information from the portable terminal on the screen of the in-vehicle device together with the data information.

11. The information display system according to claim 9, wherein:
the in-vehicle device further comprises a command input portion, and the control unit transmits a command input from the command input portion to the portable terminal through the interface of the in-vehicle device; and
the control unit of the portable terminal interprets the command supplied from the in-vehicle device so to that it can be executed.

12. The information display system according to claim 11, wherein the display control portion of the in-vehicle device displays the data information from the portable terminal and the command input portion is displayed in a touch switch on the screen of the in-vehicle device.

13. A control method of an information display system including an in-vehicle device and a portable terminal, the control method comprising:
transmitting data information to be displayed on a screen of the portable terminal to the in-vehicle device when a connection between the portable terminal and the in-vehicle device is detected; and
displaying the transmitted data information to be displayed on the screen of the portable terminal on a screen of the in-vehicle device that is larger than the screen of the portable terminal.

14. The control method according to claim 13, further comprising:
transmitting operation command data information of the portable terminal to the in-vehicle device when the connection between the portable terminal and the in-vehicle device is detected; and
displaying the operation command data information on the screen of the in-vehicle device.

15. The control method according to claim 13, wherein a command sent from the in-vehicle device is transmitted to the portable terminal so that the commands can be interpreted and executed.

16. The control method according to claim 13, further comprising switching between a non-display mode and a display mode of the screen of the portable terminal.
